(19) Europäisches Patentamt
European Patent Office
Office européen des brevets

(11) **EP 2 250 516 B1**

(12) **EUROPÄISCHE PATENTSCHRIFT**

(45) Veröffentlichungstag und Bekanntmachung des Hinweises auf die Patenterteilung:
**14.09.2016 Patentblatt 2016/37**

(21) Anmeldenummer: **09714658.3**

(22) Anmeldetag: **10.02.2009**

(51) Int Cl.:
***G01S 11/12*** (2006.01)

(86) Internationale Anmeldenummer:
**PCT/DE2009/000186**

(87) Internationale Veröffentlichungsnummer:
**WO 2009/106037 (03.09.2009 Gazette 2009/36)**

(54) **VERFAHREN ZUR BESTIMMUNG DER ENTFERNUNG EINES EINE IR-SIGNATUR EMITTIERENDEN OBJEKTS**

METHOD FOR DETERMINING THE DISTANCE OF AN OBJECT EMITTING AN IR SIGNATURE

PROCÉDÉ DE DÉTERMINATION DE LA DISTANCE D'UN OBJET ÉMETTANT UNE SIGNATURE IR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **26.02.2008 DE 102008011123**

(43) Veröffentlichungstag der Anmeldung:
**17.11.2010 Patentblatt 2010/46**

(73) Patentinhaber: **Airbus DS Electronics and Border Security GmbH**
**82024 Taufkirchen (DE)**

(72) Erfinder: **BARTH, Jochen**
**85764 Oberschleissheim (DE)**

(74) Vertreter: **Meel, Thomas et al**
**Airbus Defence and Space GmbH**
**Patentabteilung LTXI**
**88039 Friedrichshafen (DE)**

(56) Entgegenhaltungen:
**DE-A1- 3 414 798      DE-C1- 19 546 873**
**GB-A- 2 305 503      US-A- 3 026 413**
**US-A- 5 469 265      US-A- 5 677 761**

**Beschreibung**

Die Erfindung betrifft ein Verfahren zur Bestimmung der Entfernung eines eine IR-Signatur emittierenden Objekts und eine Vorrichtung zur Durchführung des Verfahrens.

Insbesondere ist die Erfindung von Bedeutung, wenn ein Flugzeug von einem selbstgetriebenen Flugkörper bedroht wird. Die meisten Flugkörper kurzer und mittlerer Reichweite haben in der Regel einen Infrarot-Suchkopf, der auf vom Flugzeug abgegebene Strahlung, hauptsächlich Strahlung von den Triebwerken empfindlich ist und nach einem zielsuchenden Lenkverfahren arbeitet. Derartige Lenkflugkörper sind relativ einfach herzustellen und können auch aus schultergetragenen Waffen, sogenannten Fliegerfäusten abgeschossen werden.

Da solche Flugkörper - im Gegensatz zu radargelenkten - passiv ihr Ziel ansteuern, sind optische Warnsensoren von wachsender Bedeutung, um rechtzeitig und auch zum richtigen Zeitpunkt Gegenmaßnahmen gegen derartige anfliegende Flugkörper auslösen zu können.

In DE 195 46 873 C1 werden ein Verfahren und eine Vorrichtung mit einem abbildenden passiven Sensor vorgeschlagen, der in mindestens zwei Wellenlängenbereichen, in denen die atmosphärischen Dämpfungskoeffizienten unterschiedlich sind, das sich nähernde Objekt detektiert. Die Erfassung des Objektes in mehreren Wellenlängenbereichen erfolgt dadurch, dass vor das optische System des passiven Warnsensors ein rotierender Filter vorgeschaltet ist, der aus mehreren Sektoren besteht, deren Transmissionsbereiche entsprechend den gewählten Wellenlängenbereichen unterschiedlich sind. Die Sensorsignale entsprechend der von dem Sensor detektierten Strahlungsleistung des anfliegenden Objektes bei den unterschiedlichen Wellenlängen werden nun herangezogen, um unter Berücksichtigung der Differenz der atmosphärischen Dämpfungskoeffizienten die Entfernung und/oder Geschwindigkeit des Objektes, z. B. eines ein Flugzeug anfliegenden Flugkörpers, zu ermitteln.

Das in DE 195 46 873 C1 beschriebene Verfahren stellt auf spektral aufgelöste Messungen bei diskreten Wellenlängen ab und ermittelt die Objektentfernung, indem das Verhältnis von jeweils zwei Sensorsignalen bei unterschiedlichen Wellenlängenbereichen gebildet wird. Dieses Verfahren ist dennoch sehr ungenau.

Aus DE 34 14 798 A1 ist ein passiver Entfernungsmesser zur Erkennung von Strahlung aussendender Objekte bekannt. Dieser Entfernungsmesser zeichnet sich dadurch aus, dass eine Sonnenglitzerstrahlung im Wellenlängenbereich von unter 2,9 $\mu$m gemessen wird. Ferner wird die Strahlung in einem so genannter Blauzacken und einer Rotschleife gemessen. Der Blauzacken und die Rotschleife befinden sich jeweils auf der kurz- bzw. langwelligen Seite eines atmosphärischen Absorptionsbandes. Aus diesen Messungen wird im Bereich der interessierenden Wellenlängen für jede Wellenlänge ein theoretisches Spektrum erzeugt, welches gewichtet wird mit einem Durchlassfaktor, welcher den Anteil der über die Entfernung R durchgelassenen Strahlung unter Berücksichtigung der Absorption durch atmosphärisches Kohlendioxid und Stickstoffoxid darstellt. Über einen Vergleich der theoretischen und experimentellen Ergebnisse wird die Entfernung zu dem Objekt ermittelt.

Aus US-A-5 469 265 ist eine Vorrichtung gemäß den Merkmalen des Oberbegriffs des geltenden Anspruchs 11 bekannt.

Aufgabe der Erfindung ist es, ein Verfahren und eine Vorrichtung anzugeben, mit denen Daten eines anfliegenden Objekts schneller und genauer als beim Stand der Technik zur Verfügung gestellt werden können.

Diese Aufgabe wird bezüglich des Verfahrens mit dem Gegenstand des Patentanspruchs 1, bezüglich der Vorrichtung mit dem Gegenstand des Patentanspruchs 11 gelöst. Vorteilhafte Ausführungen der Erfindung sind jeweils Gegenstand von Unteransprüchen

Gemäß dem Verfahren wird die spektrale Intensitätsverteilung, auch als Intensitätsverteilungsspektrum bezeichnet, eines erfassten Objekts im Bereich einer Absorptionsstruktur der Atmosphäre gemessen. In dem gemessenen Intensitätsverteilungsspektrum wird ein Punkt extremaler Steigung an einer durch die atmosphärische Absorptionsstruktur verursachten Flanke eines Intensitätsanstiegs- oder abfalls im gemessenen Intensitätsverteilungsspektrum ermittelt. Durch Vergleich mit bekannten Transmissionsdaten der Atmosphäre wird die von der Strahlung durch die Atmosphäre zurückgelegte Weglänge bestimmt, die der Entfernung zwischen Detektor und Objekt entspricht. Aus entsprechenden Entfernungsmessungen zu zwei unterschiedlichen Zeitpunkten wird zweckmäßig weiterhin die zeitliche Verschiebung der Position ermittelt und daraus die Relativgeschwindigkeit zwischen Detektor und Objekt berechnet. Das Intensitätsverteilungsspektrum kann hierbei bezüglich der Wellenlänge oder der Frequenz aufgenommen sein.

Mit anderen Worten, mit dem erfindungsgemäßen Verfahren ist es möglich, zu unterschiedlichen Zeitpunkten die spektrale Position der Flanke der spektralen Intensitätsverteilung über den Punkt maximaler Steigung zu bestimmen. Dies ist wesentlich genauer als die in DE 195 46 873 C1 beschriebene Bestimmung über die Verhältnisbildung diskreter Messungen bei unterschiedlichen Wellenlängen und weitgehend unabhängig von der spektralen Verteilung der vom Objekt emittierten Intensität, da nur ein schmaler Wellenlängenbereich ausgewertet werden muss.

Zweckmäßig wird die spektrale Intensitätsverteilung in einem Wellenlängenbereich untersucht, der im Bereich von atmosphärischen Absorptionslinien liegt, vorzugsweise in der Nähe von solchen Absorptionslinien, die durch Gase bedingt sind, deren Konzentration nur wenig mit den klimatischen Bedingungen schwankt. Besonders geeignet hierfür ist der Wellenlängenbereich von z.B. 4-5 $\mu$m, zweckmäßig von 4,3 - 4,7 $\mu$m, der im mittleren Infrarot auf der kurzwelligen und langwelligen Seite der $CO_2$-Absorptionslinie liegt. Selbstverständlich kann die spektrale Intensitätsverteilung auch in einem entsprechenden Frequenzbereich untersucht werden.

Die erfindungsgemäße Vorrichtung umfasst eine Eingangsoptik mit einem elektrisch abstimmbaren Wellenlängenfilter mit einer spannungsabhängigen Filterkennlinie, einem passiv abbildenden Detektor zum Erfassen der Strahlung des Objekts, eine erste Schaltung zur Verarbeitung des Detektorsignals, eine zweite Schaltung zur Erzeugung einer periodisch variierenden Steuerspannung für das Wellenlängenfilter. Die erste Schaltung ist zweckmäßig aus einem Differenzierglied, einem Analog-Digital-Wandler und einem Signalanalyseprozessor aufgebaut, die zweite Schaltung im Wesentlichen aus einem Funktionsgenerator, einem Taktgeber und einem Summationsglied. Ferner umfasst die Vorrichtung eine Spannungsquelle zur Erzeugung einer Offset-Spannung für die dem Wellenlängenfilter zuzuführende Spannung.

Mit dem erfindungsgemäßen Verfahren kann die gesamte von einem Objekt emittierte IR-Strahlung zu jedem Zeitpunkt vollständig erfasst und ausgewertet werden. Es wird somit das gesamte 2-dimensionale Bildfeld eines zu untersuchenden Objekts erfasst. Mit der erfindungsgemäßen Vorrichtung wird somit sämtliche vom Objektiv in die Bildebene fokussierte Strahlung der spektralen Auswertung zugeführt. Im Gegensatz zum Stand der Technik, wie er z.B. in GB 2 323 730 A beschrieben ist, werden keine Objektausschnitte betrachtet, sondern grundsätzlich das gesamte Objekt.

Die Erfindung sowie vorteilhafte Ausgestaltungen werden im Weiteren anhand von Zeichnungen näher erläutert. Es zeigen:

Fig. 1    den schematischen Aufbau einer erfindungsgemäßen Vorrichtung,
Fig. 2    die atmosphärische $CO_2$-Absorption in Abhängigkeit von der Entfernung zwischen Detektor und Objekt und der Wellenlänge,
Fig. 3    den Verlauf des Detektorsignals und des Steuersignals als Funktion der Zeit.

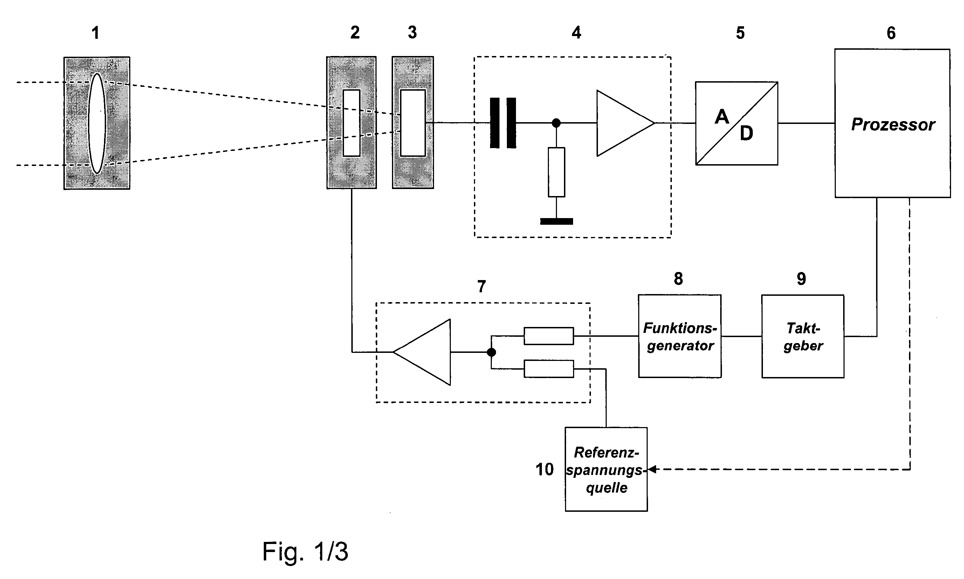

In Fig. 1 ist der schematische Aufbau einer erfindungsgemäßen Vorrichtung dargestellt. Die erfindungsgemäße Vorrichtung ist im Wesentlichen ein Sensor mit einer Eingangsoptik 1, in Form eines Objektivs, einem elektrisch abstimmbaren Wellenlängenfilter 2, welcher vor einem Detektor 3 angeordnet ist. Das Wellenlängenfilter 2 kann z.B. ein auf Basis von Silizium hergestelltes Fabry-Perot-Filter sein.

Die Detektorsignale werden über ein Differenzierglied 4 und einen Analog-Digital-Wandler 5 einem Signalanalyseprozessor 6 zugeführt. Der Signalanalyseprozessor 6 steuert einerseits einen Taktgeber 9 zur Erzeugung eines zeitlichen Referenzsignals. Andererseits steuert der Signalanalyseprozessor 6 eine Spannungsquelle 10. Der Taktgeber 9 führt das zeitliche Referenzsignal einem Funktionsgenerator 8 zur Erzeugung einer periodisch variierenden Spannung zu. Diese periodische Spannung und die Spannung der Spannungsquelle werden in einem Summationsglied 7 addiert und dem Wellenlängenfilter 2 als Steuerspannung zugeführt. Diese Steuerspannung hat somit einen konstanten Spannungsanteil, resultierend aus der Spannungsquelle 10 und einen periodischen Spannungsanteil, resultierend aus dem Funktionsgenerator 8.

Gemäß der Erfindung wird das elektrisch abstimmbare Wellenlängenfilter so angesteuert, dass um eine feste, mittlere Wellenlänge $\lambda_0$ herum ein Wellenlängenbereich $\Delta\lambda$ periodisch abgetastet wird gemäß der Beziehung

$$\lambda(t) = \lambda_0 + \Delta\lambda \cdot P(t) \tag{1}$$

wobei P(t) eine zeitlich periodische Funktion bezeichnet.

Entsprechend wird zur Steuerung des elektrisch abstimmbaren Wellenlängenfilters eine periodisch variierende Spannung (z.B. sinus-, dreieck- oder sägezahnförmig) auf einem Offset erzeugt. Für eine Steuerspannung

$$U(t) = U_0 + \Delta U \cdot \cos(\omega t)$$

erhält man mit Hilfe der Kennlinie f(U) des Wellenlängenfilters

$$\lambda(t) = f(U_0) + f(\Delta U \cdot \cos(\omega t)) \tag{2}$$

Die Offset-Spannung $U_0$ legt dabei die mittlere Wellenlänge $\lambda_0$ fest, und die Amplitude $\Delta U$ bestimmt den Wellenlängenbereich $\Delta\lambda$ der Abtastung.

Die Parameter $U_0$ und $\Delta U$ werden so gewählt, dass die zu erfassenden spektralen Merkmale der Objektsignatur im Abtastbereich enthalten sind. Das so erzeugte Detektorsignal wird differenziert und in digitale Signale gewandelt, die von einem Signalanalyseprozessor verarbeitet werden, der die spektralen Merkmale extrahiert. Durch die Differentiation entfällt der Anteil der spektral unstrukturierten Hintergrundstrahlung am Signal, und die spektralen Merkmale der Objektstrahlung werden deutlicher hervorgehoben.

Der Prozessor ordnet die extrahierten spektralen Merkmale der Wellenlänge zu, indem er das digitalisierte Detektorsignal zeitlich auf die Taktsignale des Taktgebers und damit auf die momentan anliegende Steuerspannung am Wellenlängenfilter referenziert.

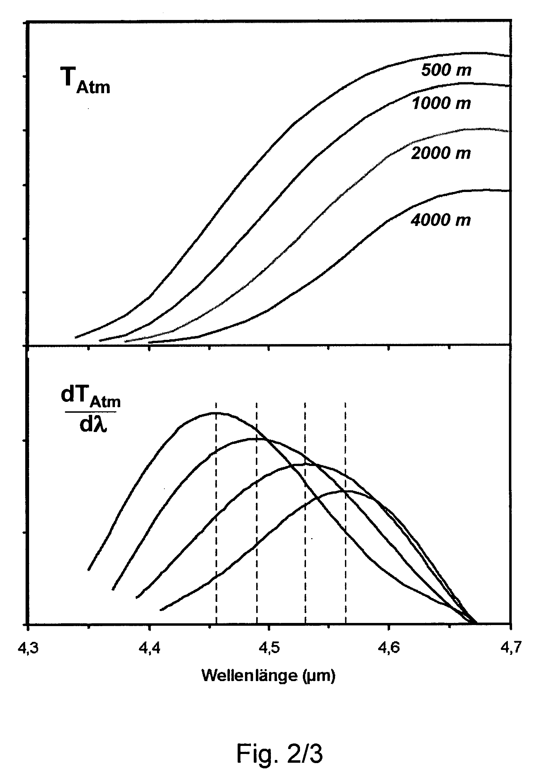

Betrachtet man konkret die Entfernungsbestimmung mit Hilfe der durch die atmosphärische CO2-Absorption zwischen $4\mu m$ und $5\mu m$ Wellenlänge entstehenden spektralen Flanke, so können entsprechend der Fig. 2 unten die Parameter für die Abtastung des Wellenlängenbereichs vorteilhaft zu $\lambda_0 = 4.5\mu m$ und $\Delta\lambda = 0{,}15\mu m$ gewählt werden. Fig. 2 zeigt im oberen Teil für die Entfernungen 500m, 1000m, 2000m und 4000m zwischen Objekt und Detektor die atmosphärische Transmission in Abhängigkeit der Wellenlänge. Im unteren Teil ist das jeweilige Differential dargestellt.

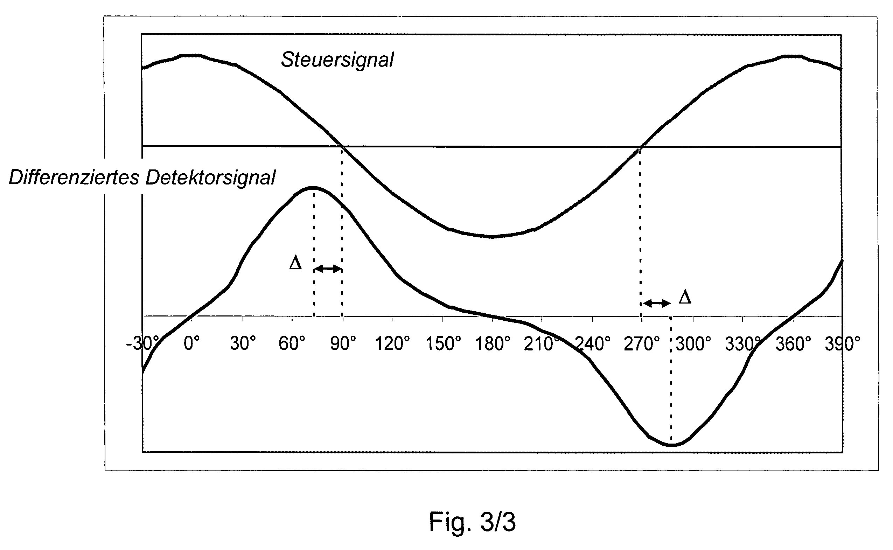

Mit diesen Parametern erhält man ein periodisch differenziertes Detektorsignal, das in Fig. 3 gezeigt ist zusammen mit der Steuerspannung für das Wellenlängenfilter entsprechend Gleichung (2). Aufgetragen sind relative Einheiten gegen das Argument der cos-Funktion der Steuerspannung, ausgedrückt als Winkel in Grad. Zunächst wird geprüft, ob Maximum und Minimum im differenzierten Detektorsignal betragsmäßig einen vorbestimmten Schwellwert überschreiten. Ist dies der Fall, so ist eine signifikante Intensitätsflanke im erfassten Bereich des Detektorsignals vorhanden. Dann wird als Referenz $t_0$ der Zeitpunkt des Nulldurchgangs im periodischen Anteil der Steuerspannung gewählt und man erhält als Messgröße, die vom Prozessor ermittelt wird, die Ablage $\Delta$ als Differenz zur Position des Maximums im differenzierten Detektorsignal.

Methoden zur Extraktion einer Maximumsposition aus einem elektrischen Signal sind z.B. aus US 4 658 368 bekannt. Damit kann die Ablage $\Delta$ und damit auch die zeitliche Verschiebung $\Delta t$ zwischen der Maximumsposition und dem Nulldurchgang im periodischen Anteil der Steuerspannung bestimmt werden, aus der dann über den zugehörigen Wert der Steuerspannung $U(t_0+\Delta t)$ und die Kennlinie des Wellenlängenfilters auch die zugehörige Wellenlänge $\lambda(t_0+\Delta t)$ erhalten werden. Damit ist die gesuchte Position der spektralen Flanke ermittelt.

In einer ersten besonderen Ausführungsform der Erfindung kann eine geschlossene Regelschleife dadurch hergestellt werden, dass die Ablage $\Delta$ als Regelgröße zur Nachführung der Größe der Referenzspannung in der Weise genutzt wird, dass die Ablage $\Delta$ auf Null eingeregelt wird. Damit fallen die Positionen der Extrema im differenzierten Detektorsignal mit den Nulldurchgängen des Referenzsignals zusammen. Die Regelschleife ist in Fig. 1 durch die gestrichelte Verbindung zwischen dem Prozessor und der Referenzspannungsquelle dargestellt. In diesem Fall erhält man die gesuchte Position der spektralen Flanke aus der Umrechnung der Größe der geregelten Referenzspannung über die Kennlinie des Wellenlängenfilters.

In einer zweiten besonderen Ausführungsform der Erfindung, die Regelgröße $\Delta$ für die Nachführung der Referenzspannung zu bestimmen, wird die näherungsweise erfüllte Symmetrie des differenzierten Detektorsignals in der Nähe des Maximums ausgenutzt. Entsprechend wird ein Zeitintervall geeigneter Größe symmetrisch um den Zeitpunkt $t_0$ des Nulldurchgangs im periodischen Anteil der Steuerspannung gewählt. Innerhalb dieses Intervalls wird jeder digitalisierte Wert des differenzierten Detektorsignals mit dem zugehörigen Wert des periodischen Anteils des Referenzsignals multipliziert und alle so erhaltenen Produkte aufaddiert. Da der periodische Anteil des Referenzsignals eine ungerade Funktion in Bezug auf $t_0$ ist, wird das Resultat zu Null, wenn die Regelgröße $\Delta$ verschwindet. Damit ist die Summe der Produkte als Regelgröße geeignet.

Mit der Erfindung ist es möglich, genauer auf charakteristische Merkmale der spektralen Intensitätsverteilung zu referenzieren. So lässt sich etwa die spektrale Position einer durch atmosphärische Absorption hervorgerufenen Flanke exakt bestimmen und über die Zeit verfolgen, indem der Wellenlängenfilter mit einer periodisch variierenden Spannung auf einem Offset angesteuert wird und das Detektorsignal mit Hilfe der (analogen oder digitalen) Differentiation und der Peak-Detektion ausgewertet wird. Aus der Peak-Detektion lässt sich dann ein Steuersignal für die Nachführung der Offset-Spannung des Wellenlängenfilters ableiten, so dass diese das Filter immer auf die Position der Flanke der spektralen Intensitätsverteilung abstimmt.

Daraus ergibt sich der Vorteil, dass die spektrale Position der Flanke über den Punkt maximaler Steigung bestimmt wird; dies ist wesentlich genauer als die Bestimmung über die Verhältnisbildung diskreter Messungen bei unterschiedlichen Wellenlängen und weitgehend unabhängig von der spektralen Verteilung der vom Objekt emittierten Intensität. Durch die Nachführung der Offset-Spannung ist die spektrale Flanke stets spektral optimal aufgelöst unabhängig von ihrer jeweiligen spektralen Position. Weitere Vorteile ergeben sich durch die Art der Verarbeitung des Detektorsignals, die eine Verbesserung des Signal-Rausch-Verhältnisses bewirkt und insbesondere zur Detektion schwacher Strukturen auf einem hohen Untergrund geeignet ist (Differentiation).

**Patentansprüche**

1. Verfahren zur Bestimmung der Entfernung eines eine Infrarot-Signatur emittierenden Objekts, wobei die spektrale Intensitätsverteilung der vom Objekt abgegebenen Strahlung in einem vorgegebenen Wellenlängenbereich erfasst wird, **dadurch gekennzeichnet, dass**

   - im Bereich einer Absorptionsstruktur der Atmosphäre ein Intensitätsverteilungsspektrum des Objekts gemessen wird,
   - im gemessenen Intensitätsverteilungsspektrum ein Punkt extremaler Steigung an einer durch die atmosphärische Absorptionsstruktur verursachten Flanke eines Intensitätsanstiegs- oder abfalls ermittelt wird,
   - und durch Vergleich mit bekannten Transmissionsdaten der Atmosphäre die von der Strahlung durch die Atmosphäre zurückgelegte Weglänge und damit auch die Entfernung zwischen Detektor und Objekt bestimmt werden.

2. Verfahren nach Anspruch 1,
   **dadurch gekennzeichnet, dass**
   zu zwei unterschiedlichen Zeitpunkten die Entfernung zwischen Detektor und Objekt bestimmt wird und aus der zeitlichen Verschiebung der Position die Relativgeschwindigkeit zwischen Detektor und Objekt berechnet wird.

3. Verfahren nach Anspruch 1 oder 2,
   **dadurch gekennzeichnet, dass**
   die spektrale Intensitätsverteilung mit einem Detektor und einem elektrisch abstimmbaren Wellenlängenfilter erfasst wird und dem Wellenlängenfilter zur Steuerung der Filtereigenschaften eine Steuerspannung zugeführt wird.

4. Verfahren nach Anspruch 3,
   **dadurch gekennzeichnet, dass**
   die Steuerspannung einen periodisch variierende Spannungsanteil $\Delta U$ und einen vorgebbaren festen Offset-Spannungsanteil $U_0$ aufweist.

5. Verfahren nach Anspruch 3 oder 4,
   **dadurch gekennzeichnet, dass**
   das Detektorsignal in einem ersten Schritt differenziert, in einem zweiten Schritt digitalisiert und in einem dritten Schritt auf die momentan am Wellenlängenfilter anliegende Steuerspannung referenziert wird.

6. Verfahren nach Anspruch 5,
   **dadurch gekennzeichnet, dass**
   Maxima und Minima im differenzierten Detektorsignal mit vorgebbaren Schwellwerten verglichen werden, und wenn die Extrema den Schwellwert betragsmäßig überschreiten, eine Ablage $\Delta$ als zeitliche Verschiebung $\Delta t$ als Differenz zwischen dem Maximum im differenzierten Detektorsignal und dem Zeitpunkt $t_0$ des Nulldurchgangs im periodischen Anteil der Steuerspannung ermittelt wird, woraus mit dem zugehörigen Wert der Steuerspannung $U(t_0+\Delta\lambda t)$ und der Kennlinie des Wellenlängenfilter die zugehörige Wellenlänge $\lambda(t_0+\Delta t)$ ermittelt wird.

7. Verfahren nach Anspruch 6,
   **dadurch gekennzeichnet, dass**
   eine zur Ablage $\Delta$ proportionale Größe als Regelgröße zur Nachführung der Größe der Steuerspannung genutzt wird, wobei die blage $\Delta$ auf Null geregelt wird.

8. Verfahren nach Anspruch 6,
   **dadurch gekennzeichnet, dass**
   symmetrisch um den Zeitpunkt $t_0$ ein Zeitintervall gewählt wird und dass innerhalb des Zeitintervalls die Summe der Produkte jedes digitalisierten Wertes des differenzierten Detektorsignals mit dem zugehörigen Wert des periodischen Anteils des Steuersignals berechnet wird.

9. Verfahren nach einem der vorangehenden Ansprüche,
   **dadurch gekennzeichnet, dass**
   der Wellenlängenbereich in der Nähe von atmosphärischen Absorptionslinien liegt, vorzugsweise in der Nähe von solchen Absorptionslinien, die durch Gase bedingt sind, deren Konzentration nur wenig mit den klimatischen Bedingungen schwankt.

**10.** Verfahren nach Anspruch 9,
**dadurch gekennzeichnet, dass**
der Wellenlängenbereich im mittleren Infrarot auf der kurzwelligen und langwelligen Seite der $CO_2$-Absorptionslinie bei etwa 4,25 $\mu$m liegt.

**11.** Vorrichtung zur Durchführung eines Verfahren nach einem der vorangehenden Ansprüche,
mit einer Eingangsoptik mit einem elektrisch abstimmbaren Wellenlängenfilter (2) mit einer spannungsabhängigen Filterkennlinie, einem passiv abbildenden Detektor (3) zum Erfassen des gesamten 2-dimensionalen Bildfeldes eines zu untersuchenden Objekts,
einer ersten Schaltung (4, 5, 6) zur Verarbeitung des Detektorssignals, einer zweiten Schaltung (7, 8, 9) zur Erzeugung einer periodisch variierenden Steuerspannung für das Wellenlängenfilter (2),
**dadurch gekennzeichnet, dass** die erste Schaltung (4, 5, 6) ein Differenzierglied (4), einen Analog-Digital-Wandler (5) und einen Signalanalyseprozessor (6) umfasst.

**12.** Vorrichtung nach Anspruch 11,
**dadurch gekennzeichnet, dass**
die zweite Schaltung (7, 8, 9) ein Funktionsgenerator (8) zur Erzeugung einer periodisch variierenden Spannung, einen Taktgeber (9) sowie ein Summationsglied (7) zur Summation der vom Funktionsgenerator (8) erzeugten periodisch variierenden Spannung mit der Spannung einer konstanten Spannungsquelle (10).

**13.** Vorrichtung nach Anspruch 12,
**dadurch gekennzeichnet, dass**
die erste Schaltung (4, 5, 6) und die zweite Schaltung (7, 8, 9) zusammen mit der konstanten Spannungsquelle (10) eine geschlossene Regelschleife bilden.

**Claims**

**1.** Method for determining the distance of an object emitting an infrared signature, the spectral intensity distribution of the radiation emitted by the object in a predefined wavelength range being detected,
**characterized in that**
an intensity distribution spectrum of the object is measured in the region of an absorption structure of the atmosphere, a point having an extremal gradient on a flank of an intensity rise or fall, caused by the atmospheric absorption structure, in the measured intensity distribution spectrum is determined,
and the path length traveled by the radiation through the atmosphere and therefore also the distance between the detector and the object are determined by comparison with known transmission data for the atmosphere.

**2.** Method according to Claim 1,
**characterized in that**
the distance between the detector and the object is determined at two different points in time, and the relative speed between the detector and the object is calculated from the temporal shift in the position.

**3.** Method according to Claim 1 or 2,
**characterized in that**
the spectral intensity distribution is detected using a detector and an electrically tunable wavelength filter, and a control voltage is supplied to the wavelength filter for the purpose of controlling the filter properties.

**4.** Method according to Claim 3,
**characterized in that**
the control voltage has a periodically varying voltage component $\Delta U$ and a predefinable fixed offset voltage component $U_0$.

**5.** Method according to Claim 3 or 4,
**characterized in that**
the detector signal is differentiated in a first step, is digitized in a second step and, in a third step, is referenced to the control voltage instantaneously applied to the wavelength filter.

**6.** Method according to Claim 5,

**characterized in that**

maxima and minima in the differentiated detector signal are compared with predefinable threshold values, and, if the magnitudes of the extremes exceed the threshold value, an offset $\Delta$ in the form of a temporal shift $\Delta t$ is determined as the difference between the maximum in the differentiated detector signal and the time to of the zero crossing in the periodic component of the control voltage, from which the associated wavelength $\lambda(t_0+\Delta t)$ is determined using the associated value of the control voltage $U(t_0+\Delta t)$ and the characteristic curve of the wavelength filter.

7.  Method according to Claim 6,
    **characterized in that**
    a variable which is proportional to the offset $\Delta$ is used as a controlled variable for tracking the magnitude of the control voltage, the offset $\Delta$ being regulated to zero.

8.  Method according to Claim 6,
    **characterized in that**
    an interval of time is selected symmetrically around the time $t_0$, and **in that** the sum of the products of each digitized value of the differentiated detector signal with the associated value of the periodic component of the control signal is calculated within the interval of time.

9.  Method according to one of the preceding claims,
    **characterized in that**
    the wavelength range is in the vicinity of atmospheric absorption lines, preferably in the vicinity of those absorption lines which are caused by gases whose concentration fluctuates only slightly with the climatic conditions.

10. Method according to Claim 9,
    **characterized in that**
    the wavelength range in the mid-infrared on the short-wave and long-wave sides of the $CO_2$ absorption line is at approximately 4.25 $\mu$m.

11. Apparatus for carrying out a method according to one of the preceding claims,
    having input optics with an electrically tunable wavelength filter (2) having a voltage-dependent filter characteristic curve, a passively imaging detector (3) for detecting all radiation emitted by the object,
    a first circuit (4, 5, 6) for processing the detector signal, and
    a second circuit (7, 8, 9) for generating a periodically varying control voltage for the wavelength filter (2),
    **characterized in that**
    the first circuit (4, 5, 6) comprises a differentiating element (4), an analog/digital converter (5) and a signal analysis processor (6).

12. Apparatus according to Claim 11,
    **characterized in that**
    the second circuit (7, 8, 9) comprises a function generator (8) for generating a periodically varying voltage, a clock generator (9) and a summation element (7) for summing the periodically varying voltage generated by the function generator (8) with the voltage from a constant voltage source (10).

13. Apparatus according to Claim 12,
    **characterized in that**
    the first circuit (4, 5, 6) and the second circuit (7, 8, 9) form a closed control loop together with the constant voltage source (10).

**Revendications**

1.  Procédé de détermination de la distance d'un objet émettant une signature IR, la répartition d'intensité spectrale du rayonnement délivré par l'objet étant saisie dans une plage de longueurs d'ondes prédéfinie, **caractérisé en ce que**

    - un spectre de répartition d'intensité de l'objet est mesuré dans le champ d'une structure d'absorption de l'atmosphère,
    - dans le spectre de répartition d'intensité mesuré, un point de pente extrême est déterminé sur un flanc d'une montée ou chute d'intensité, causé par la structure d'absorption atmosphérique,
- et la longueur d'ondes parcourue par le rayonnement à travers l'atmosphère et de ce fait également la distance entre le détecteur et l'objet sont déterminées par comparaison à des données de transmission connues.

2. Procédé selon la revendication 1, **caractérisé en ce que** pour deux moments différents, la distance entre le détecteur et l'objet est déterminée et la vitesse relative entre le détecteur et l'objet est calculée à partir du décalage temporel de la position.

3. Procédé selon la revendication 1 ou 2, **caractérisé en ce que** la répartition d'intensité spectrale est saisie avec un détecteur et un filtre de longueur d'ondes électriquement ajustable et une tension de commande est acheminée au filtre de longueur d'ondes pour commander les propriétés de filtrage.

4. Procédé selon la revendication 3, **caractérisé en ce que** la tension de commande comporte une part de tension $\Delta U$ variant périodiquement et une part de tension de décalage $U_0$ fixe pouvant être prédéfinie.

5. Procédé selon la revendication 3 ou 4, **caractérisé en ce que** le signal de détecteur est différencié dans une première phase, est numérisé dans une deuxième phase et est référencé dans une troisième phase par rapport à la tension de commande appliquée momentanément au filtre de longueur d'ondes.

6. Procédé selon la revendication 5, **caractérisé en ce que** les maxima et les minima sont comparés à des valeurs seuils pouvant être préalablement définies et si les extrêmes dépassent la valeur seuil en fonction du montant, un écart $\Delta$ en tant que décalage temporel $\Delta t$ est déterminé en tant que différence entre le maximum dans le signal de détecteur différencié et le moment $t_0$ du passage par zéro dans la partie périodique de la tension de commande, à partir de quoi la longueur d'onde $\lambda (t_0 + \Delta t)$ associée est déterminée avec la valeur associée de la tension de commande $U(t_0 + \Delta t)$ et la courbe caractéristique du filtre de longueur d'ondes.

7. Procédé selon la revendication 6, **caractérisé en ce qu'**une grandeur proportionnelle à l'écart $\Delta$, est utilisée comme grandeur réglée pour restituer la grandeur de la tension de commande, l'écart $\Delta$ étant réglé à zéro.

8. Procédé selon la revendication 6, **caractérisé en ce qu'**un intervalle de temps est choisi symétriquement autour du moment $t_0$ et **en ce qu'**à l'intérieur de l'intervalle de temps, la somme des produits de chaque valeur numérisée du signal de détecteur différencié est calculée avec la valeur associée de la partie périodique du signal de commande.

9. Procédé selon l'une quelconque des revendications précédentes, **caractérisé en ce que** la plage de longueurs d'ondes se situe à proximité des lignes d'absorption atmosphériques, de préférence à proximité des lignes d'absorption qui sont conditionnées par les gaz dont la concentration ne varie que peu avec les conditions climatiques.

10. Procédé selon la revendication 9, **caractérisé en ce que** la plage de longueurs d'ondes en infrarouge moyen se situe à environ 4,25 $\mu$m sur le côté ondes courtes et ondes longues de la ligne d'absorption de $CO_2$.

11. Dispositif pour exécuter un procédé selon l'une quelconque des revendications précédentes,
avec un système optique d'entrée avec un filtre de longueur d'ondes électriquement ajustable (2) avec une courbe caractéristique de filtre en fonction de la tension, un détecteur à reproduction passive (3) pour saisir tout le champ d'image bidimensionnel d'un objet à examiner,
avec un premier circuit (4, 5, 6) pour traiter le signal de détecteur,
un deuxième circuit (7, 8, 9) pour produire une tension de commande variant périodiquement pour le filtre de longueur d'ondes (2),
**caractérisé en ce que** le premier circuit (4, 5, 6) comporte un élément de différenciation (4), un convertisseur analogique-numérique (5) et un processeur d'analyse de signaux (6).

12. Dispositif selon la revendication 11, **caractérisé en ce que** le deuxième circuit (7, 8, 9) comporte un générateur de fonction (8) pour produire une tension variant périodiquement, un générateur d'impulsions (9) ainsi qu'un élément de totalisation (7) pour totaliser la tension à variation de période produite par le générateur de fonction (8) avec la tension d'une source de tension constante (10).

13. Dispositif selon la revendication 12, **caractérisé en ce que** le premier circuit (4, 5, 6) et le deuxième circuit (7 , 8, 9) forment une boucle de régulation fermée avec la source de tension constante (10).

Fig. 1/3

EP 2 250 516 B1

Fig. 2/3

Fig. 3/3

EP 2 250 516 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19546873 C1
- DE 3414798 A1
- US 5469265 A
- GB 2323730 A
- US 4658368 A